# EUROPEAN PATENT APPLICATION

(11) **EP 2 717 486 A1**
(43) Date of publication of application: **09.04.2014**
(21) Application number: 12290330.5
(22) Date of filing: 05.10.2012
(51) Int. Cl.: H04B 3/48

(54) **A device and method for detecting presence of a surge protection on a digital subscriber line**

(71) Applicant: Alcatel Lucent, 75007 Paris (FR)
(72) Inventor: Dupuis, Nicolas, 4051 Chaudfontaine (BE); Drooghaag, Benoit, 1421 Ophain-Bois-Seigneur-Isaac (BE)
(74) Representative: IP Hills NV

(57) **Abstract**

In order to detect the presence of a surge protection (103) on a Digital Subscriber Line (105), channel transfer function data (301; 302) are collected for that Digital Subscriber Line (105). From these channel transfer function data (301; 302), the measured attenuation versus square-root of frequency is computed (401; 402; 502; 602). From the measured attenuation versus square-root of frequency (502; 602) an expected attenuation versus square-root of frequency (501; 601) is computed through linear regression. When the measured attenuation versus square-root of frequency (502; 602) differs from the expected attenuation versus square-root of frequency (501; 601) to an extent exceeding a predefined threshold, presence of a surge protection (103) on the Digital Subscriber Line (105) is reported.

## Description

### Field of the Invention

The present invention generally relates to detecting presence of a surge protection on a Digital Subscriber Line (DSL), e.g. a Very High Speed Digital Subscriber Line (VDSL) or Asynchronous Digital Subscriber Line (ADSL) used for bidirectional data transfer over twisted pair telephone wires. More particularly, the present invention aims at disclosing a method and tool for remote detection of the presence of such surge protection, enabling the operator to remotely guide the customer in solving the cause of performance drop without a need to send a field technician to the customer premises.

### Background of the Invention

With the increasing deployment of high bandwidth services such as video-on-demand (VOD), Internet Protocol Television (IPTV) or triple play services, i.e. congruent delivery of Internet access, telephony and digital television over Digital Subscriber Lines (DSLs), the DSL system performances and the customer support by DSL operators become more and more exigent. The physical layer, i.e. the twisted pair copper wires that are used to deploy DSL services and the customer's home network, are known to be the likely cause of performance degradation impacting the Quality of Service (QoS). DSL operators consequently demand tools to diagnose sources of physical layer problems to gain in service quality.

As a result of technology evolution, new DSL flavours tend to push the frequency range used for upstream and downstream data transfer higher and higher. While traditional ADSL technology was using frequencies up to 1.1 MHz, the current VDSL2 technology makes use of frequencies up to 17 MHz or 30 MHz. Next generation DSL flavours like 4GBB, G. Fast and OmegaDSL or alternative standards such as G.hn will further drive the upper limit of used frequencies to 100 MHz or even further. The extensive use of such higher frequencies makes the DSL link vulnerable to new problems and impairments that degrade the service quality at those higher frequencies.

One of those problems is the performance drop on a DSL line caused by a surge protection. Such surge protection is a device, typically bought and installed by the customer in order to protect telephones, DSL modems, routers, computers, power wires to household equipment, etc. against over-voltages resulting for instance from lightning transported to the DSL modem / home network by the twisted pair DSL line. While such devices are service transparent in the lower frequencies used for POTS, ISDN, ADSL1 or ADSL2+ services, the presence of such surge protections may cause performance drop, i.e. loss of bit rate, in the higher frequency bands used by VDSL, VDSL2 or upcoming DSL flavours. Moreover, the higher the frequencies used by the DSL technology, the higher the service impact in case of presence of a surge protection.

At present, no solutions are existing to remotely detect the presence of such surge protection impacting the performance of a DSL line. State of the art diagnosis tools such as Alcatel Lucent's Network Analyser 5530 NA will detect a performance drop on a DSL line but offer no way to identify the presence of a surge protection at the customer premises as a root cause of the detected performance degradation. The Alcatel Lucent 5530 NA is for instance described in the document "The Alcatel-Lucent 5530 Network Analyzer: Implementing Best-Practices Access-Loop Operations", that can be downloaded from the Internet via the following URL: http://173.192.16.233/_FILES/Alcatel-Lucent/Network_Card/5530_1332148936.pdf

A straightforward solution for a DSL operator confronted with a performance drop on a particular DSL loop consists in dispatching a technician to the customer premises in order to diagnose potential sources of physical layer problems and to suggest to the customer measures that can be taken to improve the performance on the DSL loop. After visual inspection of the home network configuration, the technician will advise to remove or replace the surge protection. Such solution is expensive and time consuming, and access is required to the customer premises, i.e. the end-user's home or office.

Alternatively, one could expect to find a solution in adapting Single-Ended Line Testing (SELT) or Narrow-Band Line Testing (NBLT) techniques in order to be able to detect presence of surge protections. SELT however is a service-intrusive technique. The DSL service must be interrupted in order to carry out reflectometry based measurements. Further, SELT and NBLT techniques at present are not accurate enough to detect the low capacitance exposed by surge protections.

### Summary of the Invention

It is an objective of the present invention to resolve the above identified problem by disclosing a device and method for remote detection of the presence of a surge protection on a Digital Subscriber Line. More precisely, it is an objective of the present invention to disclose such device and method that enables a DSL operator to fast and reliably detect the presence of a performance degrading surge protection in a non-service-intrusive way, without a need to dispatch a technician, without a need to access the customer premises and without requiring presence of a human being at the customer premises to assist in the DSL loop analysis.

According to the present invention, the above defined objectives are realized by a device for detecting presence of a surge protection on a Digital Subscriber Line as defined by claim 1, comprising:
- a channel data collecting module for collecting channel transfer function data for the Digital Subscriber Line;
- processing logic configured for computing a measured attenuation versus square-root of frequency from the channel transfer function data;
- processing logic configured for computing an expected attenuation versus square-root of frequency through linear regression of the measured attenuation versus square-root of frequency;
- processing logic configured for computing a difference between the expected attenuation versus square-root of frequency and the measured attenuation versus square-root of frequency; and
- a reporting module for reporting presence of a surge protection on the Digital Subscriber Line when the difference exceeds a predetermined threshold.

Thus, the invention relies on collecting the channel transfer function data named Hlog data in DSL standards, e.g. by receiving these data from the DSL chipset in the DSL CPE (Customer Premises Equipment) modem or CO (Central Office) modem, and detecting in the channel transfer function data deviations that are induced by the inducto-capacitive nature of a surge protection that produce a dip in the higher frequencies noticeable as an additional attenuation effect in the Hlog data. Indeed, a surge protection is typically made of one or plural Metal-Oxide Varistors (MOVs) connected between the twisted pair wires. A Metal-Oxide Varistor (MOV) is made of a thin ceramic layer of various metal oxides like Zinc, acting as an insulator between two conducting metallic electrodes. By construction, such MOV results in a capacitor. To be more suitable to protect lines, MOVs used in a surge protection are typically chosen to have a low capacitance, e.g. 500 pF. As a result, the resonance phenomenon between the MOV capacitance and the component legs or PCB tracks inductance happens in the higher frequency range, e.g. up to 46 MHz. There is no dip visible in the channel transfer function within the VDSL2 band, as would be the case for MOVs used in phones. The small capacitance of MOVs used in surge protections however increases the attenuation in the high frequency bands, as a result of which a significant performance loss is experienced.

The present invention further relies on the fact that the attenuation versus square-root of the frequency curve is linearly decreasing in the frequency range where the skin effect is the main loss factor. This holds true for any cable gauge and any loop length. In case a capacitive component such as a MOV used in a surge protection is connected to the line, the attenuation will decrease faster than can be expected by the square-root law. The present invention quantifies this difference by determining the attenuation versus square-root frequency curve in a frequency range or region where the linear relation as a result of the skin effect holds true. The expected attenuation versus square-root frequency curve is determined through linear regression. This expected attenuation versus square-root frequency curve is then compared with the actually measured attenuation versus square-root frequency curve. For sake of completeness, it is noticed that the attenuation in the context of the current invention corresponds to the channel frequency response or Hlog value(s) measured. When the difference between expected attenuation and measured attenuation exceeds a certain threshold, the presence of a surge protection is assumed and reported to the DSL operator enabling the DSL operator to guide the DSL customer in solving the problem.

Detection of a surge protection according to the invention can be done remotely, without the need to have a technician or end customer assists at the customer premises. The detection according to the present invention relies on the availability of the Hlog or channel transfer function data. These Hlog data can be captured by state of the art DSL equipment and can be reported to the central office, e.g. to a network analyser there. The processor logic needed to make the computations on the Hlog data in order to detect presence of a surge protection can be integrated into a single processor or computer, or can be spread over several processors.

According to an optional aspect of the device for detecting presence of a surge protection on a Digital Subscriber Line according to the present invention, defined by claim 2, the processing logic configured for computing the difference is configured for computing a norm of residuals between the expected attenuation versus square-root of frequency and the measured attenuation versus square-root of frequency.

Indeed, one possible implementation takes the norm of residuals as measure to quantify how good the measured attenuation versus square-root of frequency curve fits the expected, theoretical curve. This norm of residuals requires simple calculations thus reducing complexity of the required processing logic.

Further optionally, as defined by claim 3, the device for detecting presence of a surge protection on a Digital Subscriber Line according to the present invention further comprises:
- processing logic configured for verifying if the measured attenuation versus square-root of frequency is monotonically decreasing.

Indeed, to exclude the presence of other impairments such as bridged taps, impedance mismatching line segments, missing POTS splitters, etc. that typically create one or more local extrema in the channel transfer function, the device according to the present invention preferably verifies if the attenuation is monotony decreasing with the square-root of frequency before computing the expected theoretical attenuation through linear regression. Such verification shall significantly increase the reliability of the surge protection detection.

Further optionally, as defined by claim 4, the channel transfer function data cover a frequency interval above 300 kHz wherein attenuation is mainly due to skin effect.

Indeed, the regression preferably excludes the lowest frequencies, e.g. below 300 kHz, where the attenuation is mainly due to the wires resistance and not dominated by the skin effect. At those frequencies, the linear relation does not hold true, as a result of which the attenuation or Hlog data measured at those frequencies cannot serve to determine the expected attenuation at frequencies where the skin effect is the dominant factor in the attenuation. Excluding the frequencies below 300 kHz consequently improves the accurateness and reliability of the present invention.

Also optionally, as defined by claim 5, is the channel transfer function data cover a frequency interval above 1.1 MHz used for digital data transfer by the Digital Subscriber Line.

Thus, depending on the DSL flavour that is deployed on the twisted pair wires, the invention may be applied in a frequency interval up to 8, 12, 17 or 30 MHz, and with future DSL evolutions even up to 100 MHz and beyond.

In addition to a device for detecting presence of a surge protection as defined by claim 1, the present invention also relates to a corresponding method for detecting presence of a surge protection on a Digital Subscriber Line as defined by claim 6, the method comprising:
- collecting channel transfer function data for the Digital Subscriber Line;
- computing a measured attenuation versus square-root of frequency from the channel transfer function data;
- computing an expected attenuation versus square-root of frequency through linear regression of the measured attenuation versus square-root of frequency;
- computing a difference between the expected attenuation versus square-root of frequency and the measured attenuation versus square-root of frequency; and
- reporting presence of a surge protection on said Digital Subscriber Line when the difference exceeds a predetermined threshold.

In addition, the present invention also relates to a corresponding computer program defined by claim 7, the computer program comprising software code adapted to perform the method of claim 6. As defined by claim 8, the invention further also relates to a corresponding computer readable storage medium comprising the computer program of claim 7.

### Brief Description of the Drawings

Fig. 1 illustrates a DSL line wherein an embodiment of the device for detecting presence of a surge protection according to the present invention is used;
Fig. 2 is a functional block scheme of the embodiment of the device for detecting presence of a surge protection according to the present invention used in Fig. 1;
Fig. 3 illustrates the effect of presence of a surge protection in a DSL line on the channel transfer function;
Fig. 4 illustrates the effect of presence of a surge protection in a DSL line on the attenuation versus square-root of frequency curve;
Fig. 5 illustrates linear regression on the attenuation versus square-root of frequency curve as done in an embodiment of the present invention to determine the expected attenuation, and computation of the difference between expected and measured attenuation for a DSL line without surge protection; and
Fig. 6 illustrates linear regression on the attenuation versus square-root of frequency curve as done in an embodiment of the present invention to determine the expected attenuation, and computation of the difference between expected and measured attenuation for a DSL line with surge protection.

### Detailed Description of Embodiment(s)

The value and unique benefit of the present invention is to provide a way to identify a surge protection connected to a DSL line as root cause of a performance drop. Moreover, the present invention provides a remote diagnosis tool that can be integrated in DSL network analyzers such as for instance Alcatel Lucent's 5530 Network Analyzer. The remote detection of surge protections offers a DSL operator the possibility to guide the end-customer to solve the problem himself, i.e. removing the surge protection, and avoids the need to send a field technician to the customer premises, which is very costly for the operator.

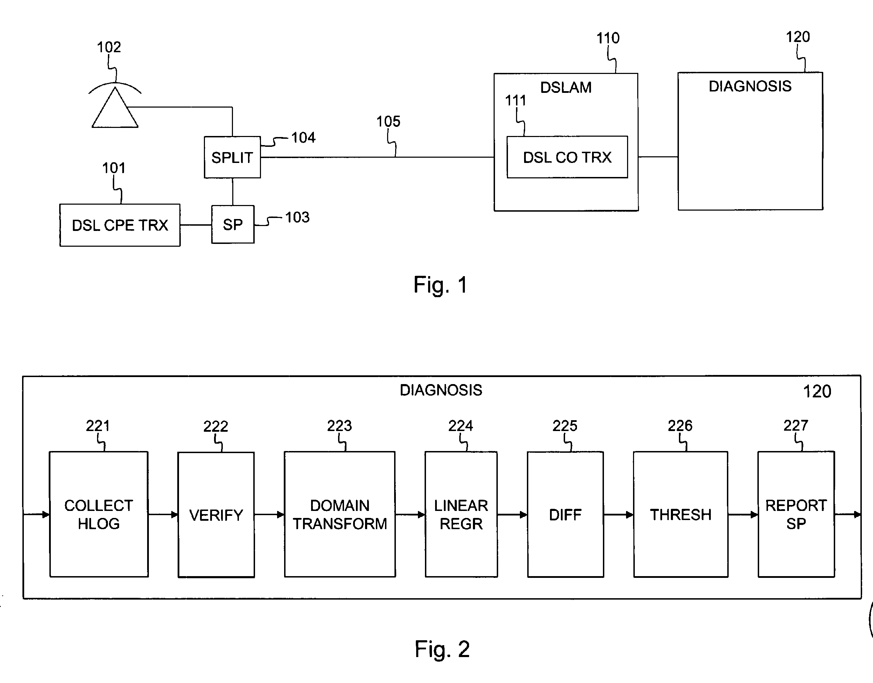

Fig. 1 illustrates an embodiment of the invention. A DSL Customer Premises Equipment (CPE) transceiver, 101 or DSL CPE TRX, and a phone 102 are connected to twisted pair telephone wiring 105 via a POTS splitter, 104 or SPLIT. The DSL CPE transceiver 101 is protected against over-voltages via a surge protection, 103 or SP, in between the POTS splitter 104 and the DSL CPE transceiver 101. The DSL CPE transceiver 101 communicates with a DSL Central Office (CO) transceiver 111 that forms part of a Digital Subscriber Line Access Multiplexer 110. The DSL operator further has a network diagnosis tool, 120 or DIAGNOSIS, that analyzes the entire operator's DSL network. This network diagnosis tool 120, more particularly the functional blocks therein that enable to detect presence of the surge protection 103, are shown in more detail in Fig. 2.

The network diagnosis tool 120 illustrated by Fig. 2 hosts a module 221 that automatically collects channel frequency response data, also named Hlog data. The Hlog data may be measured by 221, or they may be obtained on request or regular basis from the DSL chipsets in the DSL CPE and CO modems. These DSL chipsets according to standard already measure the channel transfer function and use the Hlog data in the bit loading process. A verification module 222 or VERIFY is programmed or configured to verify if the Hlog data are monotony decreasing. This way, the presence of other impairments such as bridged taps, impedance mismatches, etc. are excluded. Such impairments typically result in one or more dips in the Hlog data and must be removed before the Hlog data are suitable for use in the present invention. The network diagnosis tool 120 in addition contains a processing module 223, e.g. a software module running on a processor, that determines the attenuation as a function of the square-root of frequency. This module is named DOMAIN TRANSFORM in Fig. 2 as this module transforms the Hlog data from the frequency domain where the Hlog data do not follow a linear law to the square-root of frequency domain since the Hlog curve is expected to follow a linear law in this domain. The network diagnosis tool 120 in addition contains a processing module 224, which may be implemented through the same piece of software running on the same processor, that calculates the estimated attenuation as a function of the square-root of frequency by applying a linear regression on the attenuation curve as determined by 223. This module is named LINEAR REGR in Fig. 2. The functional block 225 or DIFF further is configured to quantify the difference between the estimated attenuation and the measured attenuation. The functional block 225 thereto for instance calculates the norm of residuals. Functional block 226 or THRESH compares the quantified difference with a predetermined threshold. When the difference exceeds the threshold, a surge protection is present. When the difference stays below the threshold, no surge protection is detected. The network diagnosis tool 220 at last contains a module 227 or REPORT SP that is able to inform the operator on the fact that a surge protection is present on a DSL line when the difference calculated by 225 exceeds the predetermined threshold in 226.

The implementation of this invention illustrated by Fig. 2 hence consists in performing a linear regression of the measured loop attenuation versus the square-root of frequency, and calculating the norm of residuals as a metric to quantify how good the measured loop attenuation curve fits the theoretical curve obtained through linear regression. The regression must exclude the lowest frequencies where the loop attenuation is mainly due to the wires resistance and not dominated by the skin effect.

An implementation of the method according to the invention comprises the steps described in the following paragraphs.

COLLECT HLOG 221 collects the channel transfer function data or Hlog data. It is noticed that COLLECT HLOG 221 may either perform the measurement itself or alternatively may collect the Hlog data from the CPE or CO equipment that already measured the channel transfer function, e.g. for other reasons such as bit loading.

VERIFY 222 verifies that the attenuation, i.e. the Hlog data, is monotony decreasing with the frequency to exclude presence of other impairments on the DSL line or in the home network, such as for instance bridged-taps, impedance mismatched line segments or missing POTS splitter. These other impairments typically create one or more local minima or maxima in the channel transfer function and must be removed before the Hlog data can be used to detect the presence of a surge protection.

DOMAIN TRANSFORM 223 determines the attenuation as a function of the square-root of frequency. DOMAIN TRANSFORM 223 in other words transforms the channel frequency response to a domain where it is expected to follow a linear law.

LINEAR REGR 224 computes a linear regression of the attenuation versus square-root of frequency to obtain the estimated attenuation versus square-root of frequency, typically in a frequency range above 300 kHz that may range up to 8 MHz, 12 MHz, 17 MHz, 30 MHz or even 100 MHz depending on the DSL flavor that is deployed over the twisted pair loop.

DIFF 225 thereupon computes the norm of residuals between the attenuation curve measured and transformed by DOMAIN TRANSFORM 223 and the estimated attenuation curve determined by LINEAR REGR 224 through linear regression. The computed norm of residuals shall serve as a quantification of the difference between these curves. Obviously, any other technique available to quantify the difference between curves may serve as a measure for the difference between estimated and measured curves in variant implementations of the present invention.

THRESH 226 thereafter compares the norm of residuals, i.e. the difference measure calculated by DIFF 226, with a predetermined threshold. In case the norm of residuals is below the threshold, the measured attenuation is assumed to fit the estimated theoretical attenuation, as a result of which no problem is detected on the DSL line. In case however the norm of residuals is higher than the predetermined threshold, the measured attenuation does not fit the estimated theoretical attenuation and the presence of the surge protection SP 103 causing the additional performance drop - in addition to the performance drop resulting from the skin effect that is modeled through the linear regression - is detected.

REPORT SP 227 informs the DSL operator of the presence of a surge protection at the customer end in case the norm of residuals exceeds the predetermined threshold. Typically, the network analysis tool where the surge protection diagnosis tool 120 forms part of shall have a graphical user interface that enables to notify the DSL operator on a problem, e.g. through a pop-up window or other visual indication such as a red flag, a mark, a flashing sign, etc., eventually combined with an audible indication.

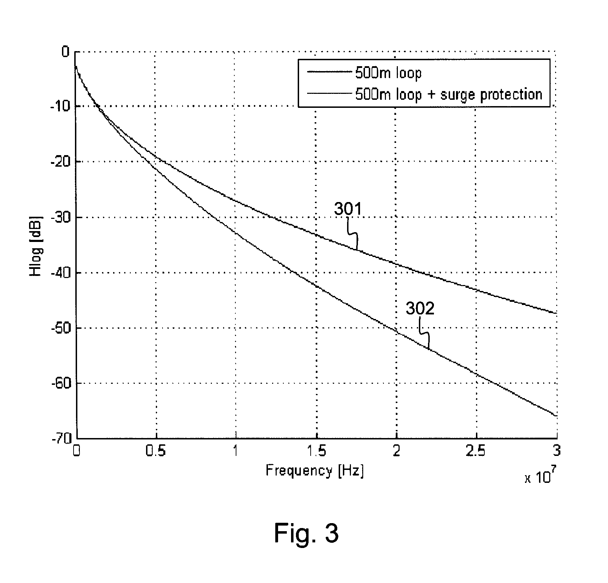

Fig. 3 shows the effect of a surge protection, i.e. the Belkin SurgeCube surge protection, on the channel transfer function of a 500 m DSL loop. The MOVs used in this surge protection exhibit a total capacitance of 500 pF up to 46 MHz, i.e. the resonance frequency. This creates an additional signal attenuation of about 10 dB at 17 MHz and 20 dB at 30 MHz in the channel frequency response curve 302 when compared to the channel transfer function 301 measured on the same DSL loop in absence of the surge protection.

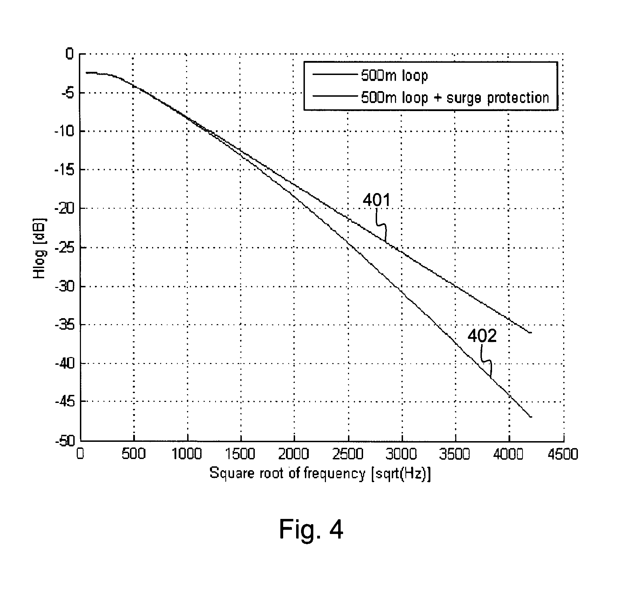

Fig. 4 shows the effect of the same surge protection on the same 500 m DSL loop when the channel transfer function Hlog or attenuation is plotted in function of the square-root of the frequency, i.e. after a transfer of domain. Whereas the channel transfer function 401 in absence of the surge protection decreases linearly above 300 kHz, the channel transfer function 402 in case of presence of the surge protection shows an additional attenuation that becomes worse with increasing frequency. The attenuation in other words decreases faster than can be expected by the square-root law that models the skin effect of the wires as a linear decrease.

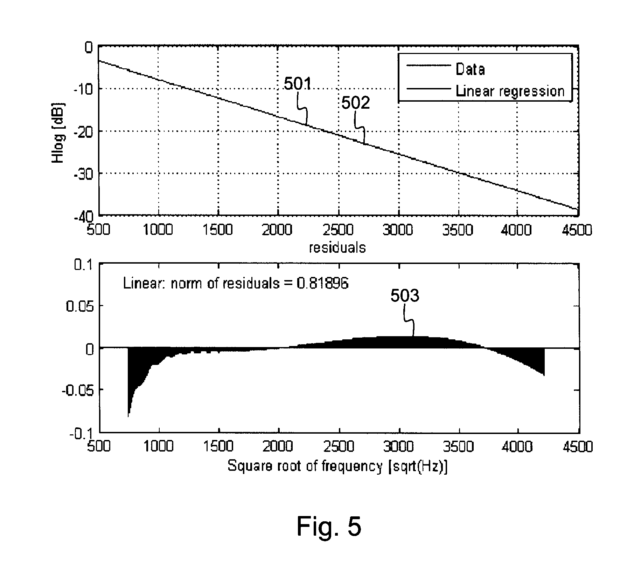

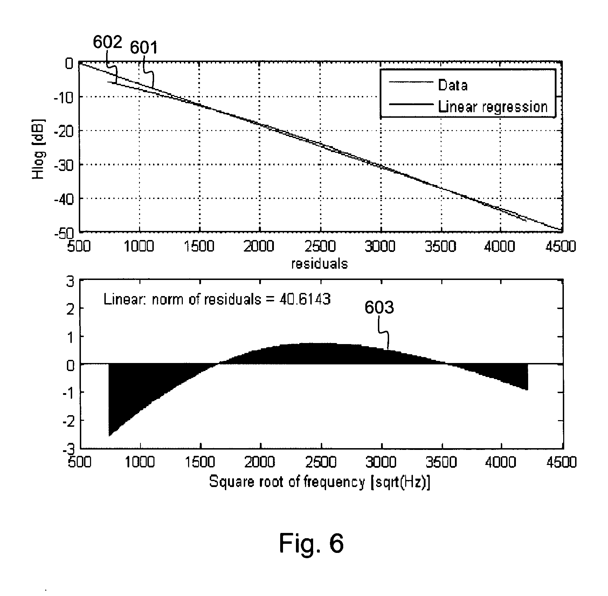

An example execution of the algorithm according to the present invention is further illustrated by Fig. 5 and Fig. 6. Fig. 5 shows the attenuation curve 501 obtained through linear regression performed on the attenuation versus square-root of frequency curve for a 500 m DSL loop. In the example, the linear regression is performed between DSL tones 128 and 4096, i.e. 550 kHz to 17 MHz. Fig. 5 further shows the effective attenuation 502 measured on the DSL loop without surge protection. Both curves seem to coincide in Fig. 5. The norm of residuals between the two curves is equal to 0.81896 as is illustrated by 503 meaning that the measured attenuation fits the theoretical one very well. In case a threshold of 5.00 is predefined, the algorithm according to the present invention shall conclude that no surge protection is installed on the DSL line.

Fig. 6 shows the attenuation curve 601 obtained through linear regression performed on the attenuation versus square-root of frequency curve for the same 500 m DSL loop, this time with a surge protection installed. Fig. 6 further shows the effective attenuation 602 measured on the DSL loop with surge protection. With the surge protection connected, the norm of residuals between the two curves raises to 40.6143 as is indicated by 603. With a predetermined threshold of 5.00, the algorithm according to the present invention concludes that a surge protection is installed on the DSL line.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A device (120) for detecting presence of a surge protection (103) on a Digital Subscriber Line (105),
wherein said device (120) comprises:
- a channel data collecting module (221) for collecting channel transfer function data (301; 302) for said Digital Subscriber Line (105);
- processing logic (223) configured for computing a measured attenuation versus square-root of frequency (401; 402; 502; 602) from said channel transfer function data (301; 302);
- processing logic (224) configured for computing an expected attenuation versus square-root of frequency (501; 601) through linear regression of said measured attenuation versus square-root of frequency (502; 602);
- processing logic (225) configured for computing a difference (503; 603) between said expected attenuation versus square-root of frequency (501; 601) and said measured attenuation versus square-root of frequency (502; 602); and
- a reporting module (227) for reporting presence of a surge protection (103) on said Digital Subscriber Line (105) when said difference (603) exceeds a predetermined threshold.

2. A device (120) for detecting presence of a surge protection (103) on a Digital Subscriber Line (105) according to claim 1,
wherein said processing logic (225) configured for computing said difference is configured for computing a norm of residuals (503; 603) between said expected attenuation versus square-root of frequency (501; 601) and said measured attenuation versus square-root of frequency (502; 602).

3. A device (120) for detecting presence of a surge protection (103) on a Digital Subscriber Line (105) according to claim 1, further comprising:
- processing logic (222) configured for verifying if said measured attenuation versus square-root of frequency (401; 402; 502; 602) is monotonically decreasing.

4. A device (120) for detecting presence of a surge protection (103) on a Digital Subscriber Line (105) according to claim 1,
wherein said channel transfer function data (301; 302) cover a frequency interval above 300 kHz wherein attenuation is mainly due to skin effect.

5. A device (120) for detecting presence of a surge protection (103) on a Digital Subscriber Line (105) according to claim 1,
wherein said channel transfer function data (301; 302) cover a frequency interval above 1.1 MHz used for digital data transfer over said Digital Subscriber Line (105).

6. A method for detecting presence of a surge protection (103) on a Digital Subscriber Line (105),
wherein said method comprises:
- collecting channel transfer function data (301; 302) for said Digital Subscriber Line (105);
- computing a measured attenuation (401; 402; 502; 602) versus square-root of frequency from said channel transfer function data (301; 302);
- computing an expected attenuation versus square-root of frequency (501; 601) through linear regression of said measured attenuation versus square-root of frequency (502; 602);
- computing a difference (503; 603) between said expected attenuation versus square-root of frequency (501; 601) and said measured attenuation versus square-root of frequency (502; 602); and
- reporting presence of a surge protection (103) on said Digital Subscriber Line (105) when said difference (603) exceeds a predetermined threshold.

7. A computer program comprising software code adapted to perform the method of claim 6.

8. A computer readable storage medium comprising the computer program of claim 7.
